Europäisches Patentamt

European Patent Office

Office européen des brevets

(11) Veröffentlichungsnummer: **0 255 850**
**A2**

## (12) EUROPÄISCHE PATENTANMELDUNG

(21) Anmeldenummer: 87103448.4

(22) Anmeldetag: 10.03.87

(51) Int. Cl.⁴: **G02F 1/133**

(30) Priorität: 07.08.86 DE 3626689

(43) Veröffentlichungstag der Anmeldung:
**17.02.88 Patentblatt 88/07**

(84) Benannte Vertragsstaaten:
**DE FR GB**

(71) Anmelder: **VDO Adolf Schindling AG**
**Gräfstrasse 103**
**D-6000 Frankfurt/Main(DE)**

(72) Erfinder: **Baeger, Holm, Dr.**
**Salzbornstrasse 1**
**D-6231 Schwalbach(DE)**
Erfinder: **Fertig, Werner, Dr.**
**Paul-Wagner-Strasse 66**
**D-6100 Darmstadt(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Flüssigkristallzelle.**

(57) Bei einer Flüssigkristallzelle mit im Abstand zueinander angeordneten Substraten, die zwischen sich einen mit Flüssigkristallsubstanz gefüllten Zellraum bilden, und mit auf den Substraten zellraumseitig angeordneten Leiterbahnen, Elektroden und zwischen den Leiterbahnen und den Elektroden angeordneten Schaltelementen, sind die Schaltelemente im wesentlichen von den sich jeweils gegenüberstehenden Kanten der Leiterbahnen und mit den Elektroden verbundener Leitstücke gebildet, wobei zwischen den Kanten eine Isolatorschicht angeordnet ist.

EP 0 255 850 A2

Fig. 1

a)

b)

## Flüssigkristallzelle

Die Erfindung betrifft eine Flüssigkristallzelle mit im Abstand zueinander angeordneten Substraten, die zwischen sich einen mit Flüssigkristallsubstanz gefüllten Zellraum bilden, und mit auf den Substraten zellraumseitig angeordneten Leiterbahnen, Elktroden und zwischen den Leiterbahnen und den Elektroden angeordneten Schaltelementen.

Bei Flüssigkristallzellen, die eine Vielzahl von Elektroden aufweisen, welche über von Leiterbahnen gebildete Datenleitungen getrennt ansteuerbar sind, sind zwischen den Leiterbahnen und den Elektroden Schaltelemente angeordnet, welche die Leiterbahnen mit der jeweiligen Elektrode verbinden, wenn an der Leiterbahn eine vorgegebene Mindestspannung anliegt. Diese Schaltelemente werden bei bekannten Flussigkristallzellen als Metall-Isolator-Metall-Elemente (im folgenden MIM-Elemente genannt) ausgefuhrt. Neben ihrer Eigenschaft als Schaltelemente weisen die MIM-Elemente eine Kapazität auf, welche zusammen mit der Kapazität der Elektrode einen kapazitiven Spannungsteiler bildet. Dadurch gelangen auch im nichtleitenden Zustand Signalströme zur Elektrode, so daß bei zu großer Kapazität des MIM-Elements Störungen sichtbar werden.

Aufgabe der vorliegenden Erfindung ist es, diese Störungen zu vermeiden.

Diese Aufgabe wird erfindungsgemäß dadurch gelöst, daß die Schaltelemente im wesentlichen von den sich jeweils gegenuberstehenden Kanten der Leiterbahnen und mit den Elektroden verbundener Leitstücke gebildet sind, wobei zwischen den Kanten eine Isolatorschicht angeordnet ist.

Die erfindungsgemäße Flüssigkristallzelle weist den Vorteil auf, daß die Kapazität der Schaltelemente, insbesondere der MIM-Elemente sehr gering gehalten werden kann.

Eine Weiterbildung der Erfindung sieht vor, daß zu den Leiterbahnen parallel verlaufende Kanten der Leitstücke sich im Bereich der Kanten der Leitstücke befinden. Ein vorteilhaftes Herstellungsverfahren hierzu besteht darin, daß die Kanten der Leitstücke durch die Kanten der Leiterbahnen definiert werden. Daher kann insbesondere nach Herstellung der Leiterbahnen in einem Photoprozeß eine Belichtung von der den Leiterbahnen entgegengesetzten Seite des Substrats erfolgen.

Eine Weiterbildung der Erfindung besteht darin, daß mehrere Leiterbahnen parallel verlaufen und daß die Flächen zwischen den Leiterbahnen größtenteils von Elektroden ausgefüllt sind.

Dadurch ist es möglich, den weitaus größten Teil der Fläche der Flüssigkristallzelle mit Elektroden zu versehen, was insbesondere positiv zur Erkennbarkeit der darzustellenden Informationen beiträgt.

Gemäß einer anderen Weiterbildung ist vorgesehen, daß die Leitstücke in Längsrichtung der Leiterbahnen eine wesentlich geringere Ausdehnung als die Elektroden aufweisen. Diese Weiterbildung ermöglicht ebenfalls eine geringe Kapazität der MIM-Elemente.

Sowohl die Leiterbahnen als auch die Leitstucke können in vorteilhafter Weise aus Tantal hergestellt werden. Es ist jedoch auch möglich, die Leitstücke, ebenso wie die Elektroden aus Indium-Zinn-Oxid (ITO) herzustellen. Die Isolatorschicht besteht vorzugsweise aus Tantal-Pentoxid.

Durch eine weitere Ausführungsform der Erfindung, die darin besteht, daß die Leitstücke aus einer leitenden Schicht bestehen, die in einem das Schaltelement bildenden Abschnitt im wesentlichen auf der Ebene der Leiterbahn verläuft und in weiteren Abschnitten auf einer Isolierschicht angeordnet ist, deren Stärke ein Vielfaches der Stärke der Leiterbahn ist, ist eine genaue Dimensionierung der MIMElemente bezüglich ihrer Ausdehnung in Richtung der Leiterbahnen möglich.

Dazu kann in vorteilhafter Weise ein Herstellungsverfahren angewendet werden, das dadurch gekennzeichnet ist, daß nach Aufbringen der Leiterbahnen und entsprechend strukturierter Schichten mit Hilfe photosensitiver Verfahren, wobei eine Belichtung von der Leiterbahnseite erfolgt, die Isolierschicht aufgebracht wird, welche im Bereich der Leitstücke Aussparungen aufweist, daß durch Belichtung von der der Leiterbahn entgegengesetzten Seite eine der Ausdehnung des Leitstückes entsprechend strukturierte Schicht erzeugt wird und daß danach die das Leitstück bildende leitende Schicht aufgebracht wird.

Die Erfindung läßt zahlreiche Ausführungsformen zu. Zwei davon sind schematisch in der Zeichnung an Hand mehrerer Figuren dargestellt und nachfolgend beschrieben. Es zeigt:

Fig. 1 einen Teil einer bekannten Flüssigkristallzelle,

Fig. 2 einen Teil einer erfindungsgemäßen Flüssigkristallzelle als erstes Ausführungsbeispiel und

Fig. 3 bis 6 ein zweites Ausführungsbeispiel, wobei mehrere Phasen während der Herstellung des Ausführungsbeispiels dargestellt sind.

Gleiche Teile sind in den Figuren mit gleichen Bezugszeichen versehen. Ferner ist in den Figuren jeweils eine Draufsicht und ein Querschnitt dargestellt.

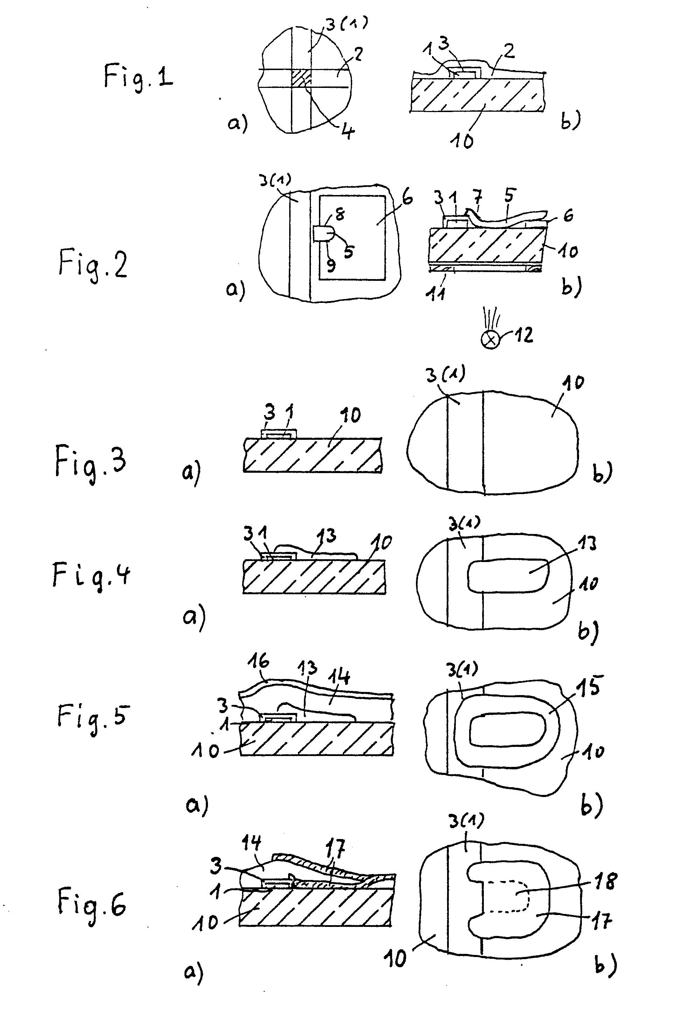

Bei dem in Fig. 1 dargestellten Ausschnitt einer bekannten Flüssigkristallzelle wird das MIM-Element von zwei sich kreuzenden Leiterbahnen 1, 2 gebildet. Die sich kreuzenden Leiterbahnen 1, 2 sind von einer Isolatorschicht 3 getrennt. Für die Kapazität des MIM-Elements ist die schraffierte Fläche 4 maßgebend. Wie eingangs erwähnt, hat es sich herausgestellt, daß diese Kapazität für viele Anwendungsfälle zu groß ist.

Bei dem in Fig. 2 dargestellten Ausschnitt einer erfindungsgemäßen Flüssigkristallzelle wird das MIM-Element aus der Leiterbahn 1, einem Leitstück 5 und der Isolatorschicht 3 gebildet. Dabei stehen sich das Leitstucke 5 und die Leiterbahn 1 nur in der Nähe von deren Kanten gegenüber, wobei die für die Kapazität wirksame Fläche aufgrund der geringen Schichtstärken wesentlich kleiner als bei der bekannten Flüssigkristallzelle ist.

Auf der von der Leiterbahn 1 abgewandten Seite ist das Leitstück 5 mit einer Elektrode 6 leitend verbunden. Außer der geringen Kapazität des MIM-Elements weist die erfindungsgemäße Anordnung den Vorteil auf, daß der flächenmäßige Anteil der Elektroden 6 im Verhältnis zuden Leiterbahnen 1 und den MIM-Elementen groß ist. Dieses ist im Sinne einer guten Erkennbarkeit der darzustellenden Zeichen erforderlich.

Um bei der Herstellung der erfindungsgemäßen Flussigkristallzelle eine exakte Lage der Kante 7 des Leitstückes 5 gegenüber der Leiterbahn zu erhalten, kann in vorteilhafter Weise eine photosensitive Schicht, welche vor der Aufbringung des Leitstückes 5 aufge tragen wird, durch das Substrat 10 hindurch belichtet werden. Dadurch wird erreicht, daß die Leiterbahn 1 gleichzeitig als Maske dient. Probleme mit der Registrierung der Maske bezüglich der relativen Lage der Kante 7 zur Leiterbahn 1 können nicht auftreten. Durch die Belichtung durch das Substrat 10 ist sichergestellt, daß die das Leitstück 5 bildende Schicht sich nicht mit der Leiterbahn 1 überlappt.

Um eine Begrenzung des Leitstückes 5 in Richtung der Längsausdehnung der Leiterbahn 1 zu erreichen, ist die Anwendung einer weiteren Maske bei der Belichtung durch das Substrat 10 erforderlich, um beispielsweise die Kanten 8, 9 des Leitstückes festzulegen. Bei der Belichtung durch das Substrat 10 kann diese Maske 11 jedoch nur zwischen der Lichtquelle 12 und dem Substrat 10 angeordnet sein. Dadurch, daß die Maske 11 nicht direkt auf der photosensitiven Schicht aufliegt, sondern von dieser durch das Substrat 10 getrennt ist, ergibt sich eine unscharfe Abbildung der Maske 11. Dieses hat zur Folge, daß der Abstand der Kanten 8, 9 und damit die Breite des Leitstückes 5 Schwankungen unterworfen sind, die bei kleinen Strukturen unzulässig groß werden können.

Bei dem in den Figuren 3 bis 6 dargestellten Ausführungsbeispiel und bei dem Verfahren zur Herstellung dieses Ausführungsbeispiels sind diese Schwankungen jedoch ausgeschlossen. Fig. 3 stellt das Substrat 10, die Leiterbahn 1 sowie die Isolatorschicht 3 nach deren Herstellung dar. Die vorangegangenen Verfahrensschritte sind an sich bekannt und brauchen im Zusammenhang mit der vorliegenden Erfindung nicht näher erläutert zu werden.

Anschließend wird die in Fig. 4 dargestellte Abdeckung 13 aufgebaut, worauf eine Isolierschicht 14 aufgebracht wird, welche eine wesentlich größere Stärke als die Isolatorschicht 3 und die Leiterbahn 1 aufweist. Dabei bleibt der Bereich der Abdeckung 13 (Fig. 4) frei. Im Anschluß daran wird auf die Isolierschicht 14 eine photosensitive Schicht aufgebracht, die durch das Substrat 10 hindurch belichtet wird.

Dabei wird in ähnlicher Weise, wie in Fig. 2b) dargestellt, eine Maske angewendet, die im Bereich 15 (Fig. 5b) durchlässig ist. Die Ränder dieses Bereichs 15 werden unscharf abgebildet. Eine scharfe Abbildung des für die Kapazität des MIM-Elementes wichtigen Bereichs erfolgt jedoch durch die Leiterbahn 1. Unter Verwendung der somit strukturierten photosensitiven Schicht 16 wird dann eine leitende Schicht 17 aufgebracht, welche die in Fig. 6 dargestellte Form aufweist. Im Bereich 18 liegt diese Schicht auf dem Substrat auf, befindet sich also in einer Ebene mit der Leiterbahn 1. Die Länge der sich somit gegenüberstehenden Kanten des durch die leitende Schicht 17 gebildeten Leitstückes und der Leiterbahn 1 ist somit exakt durch die durch Kontaktbelichtung hergestellte Abdeckung 13 gegeben. Die Kanten des Bereichs 15 sind zwar - bedingt durch die unscharfe Abbildung der Maske 11 - ungenau. Dieses trägt jedoch nicht zu einer Ungenauigkeit der Eigenschaften des MIM-Elements bei, da die leitende Schicht 17 außerhalb des Bereichs 13 durch die Stärke der Isolierschicht 14 einen ausreichenden Abstand von der Leiterbahn 1 aufweist.

## Ansprüche

1. Flüssigkristallzelle mit im Abstand zueinander angeordneten Substraten, die zwischen sich einen mit Flüssigkristallsubstanz gefüllten Zellraum bilden, und mit auf den Substraten zellraumseitig angeordneten Leiterbahnen, Elektroden und zwischen den Leiterbahnen und den Elektroden angeordneten Schaltelementen, dadurch gekennzeichnet, daß die Schaltelemente im wesentlichen von den sich jeweils gegenüberstehenden Kanten der Leiterbahnen (1) und mit den Elektroden (6) verbundener Leitstücke (5) gebildet sind, wobei zwischen den Kanten eine Isolatorschicht (3) angeordnet ist.

2. Flüssigkristallzelle nach Anspruch 1, dadurch gekennzeichnet, daß zu den Leiterbahnen (1) parallel verlaufende Kanten der Leitstucke (5) sich im Bereich der Kanten der Leiterbahnen (1) befinden.

3. Flüssigkristallzelle nach Anspruch 1 oder 2, dadurch gekennzeichnet, daß die Schaltelemente Metall-Isolator-Metall-Elemente sind.

4. Flüssigkristallzelle nach einem der vorhergehenden Ansprüche, dadurch gekennzeichnet, daß mehrere Leiterbahnen (1) parallel verlaufen und daß die Flächen zwischen den Leiterbahnen größtenteils von Elektroden (6) ausgefüllt sind.

5. Flüssigkristallzelle nach einem der vorhergehenden Ansprüche, dadurch gekennzeichnet, daß die Leitstücke (5) in Längsrichtung der Leiterbahnen (1) eine wesentlich geringere Ausdehnung als die Elektroden (6) aufweisen.

6. Flüssigkristallzelle nach einem der vorhergehenden Ansprüche, dadurch gekennzeichnet, daß die Leiterbahnen (1) aus Tantal bestehen.

7. Flüssigkristallzelle nach einem der vorhergehenden Ansprüche, dadurch gekennzeichnet, daß die Leitstücke (5) und die Elektroden (6) aus Indium-Zinn-Oxid bestehen.

8. Flüssigkristallzelle nach einem der vorhergehenden Ansprüche, dadurch gekennzeichnet, daß die Leitstücke (5) aus Tantal bestehen.

9. Flüssigkristallzelle nach einem der vorhergehenden Ansprüche, dadurch gekennzeichnet, daß die Isolatorschicht (3) aus Tantal-Pentoxid besteht.

10. Flüssigkristallzelle nach einem der vorhergehenden Ansprüche, dadurch gekennzeichnet, daß die Leitstücke (5) aus einer leitenden Schicht (17) bestehen, die in einem das Schaltelement bildenden Abschnitt (18) im wesentlichen auf der Ebene der Leiterbahn (1) verläuft und in weiteren Abschnitten auf einer Isolierschicht (14) angeordnet ist, deren Stärke ein Vielfaches der Stärke der Leiterbahn (1) ist.

11. Verfahren zur Herstellung einer Flüssigkristallzelle nach Anspruch 10, dadurch gekennzeichnet, daß nach Aufbringen der Leiterbahnen und entsprechend strukturierter Schichten mft Hilfe photosensitiver Verfahren, wobei eine Belichtung von der Leiterbahnseite erfolgt, die Isolierschicht aufgebracht wird, welche im Bereich der Leitstücke Aussparungen aufweist, daß durch Belichtung von der der Leiterbahn entgegengesetzten Seite eine der Ausdehnung des Leitstückes entsprechend strukturierte Schicht erzeugt wird und daß danach die das Leitstück bildende leitende Schicht aufgebracht wird.

12. Verfahren zur Herstellung einer Flüssigkristallzelle nach einem der Ansprüche 1 bis 9, dadurch gekennzeichnet, daß die Kanten der Leitstücke durch die Kanten der Leiterbahnen definiert werden.

13. Verfahren nach Anspruch 12, dadurch gekennzeichnet, daß in einem nach der Herstellung der Leiterbahnen erfolgenden Photoprozeß eine Belichtung von der den Leiterbahnen entgegengesetzten Seite des Substrats erfolgt.

0 255 850

Fig.1

Fig.2

Fig.3

Fig.4

Fig.5

Fig.6